# EUROPEAN PATENT APPLICATION

(11) **EP 2 765 494 A1**
(43) Date of publication of application: **13.08.2014**
(21) Application number: 13807650.0
(22) Date of filing: 18.06.2013
(51) Int. Cl.: G06F 3/048

(54) **ICON MANAGEMENT METHOD FOR USER INTERFACE AND TOUCH CONTROL DEVICE**

(30) Priority: 19.06.2012 CN 201210203319
(71) Applicant: Huawei Device Co., Ltd., Longgang District Shenzhen Guangdong 518129 (CN)
(72) Inventor: WANG, Quanquan, Shenzhen Guangdong 518129 (CN)
(74) Representative: Maiwald Patentanwalts GmbH
(86) International application number: PCT/CN2013/077361
(87) International publication number: WO 2013/189270

(57) **Abstract**

Embodiments of the present invention relate to the field of communications, and provide a user interface icon management method and a touch device to enhance user experience. The method includes: receiving a state activation instruction based on an icon by using a screen of a touch device, so as to activate the icon into a movable state; receiving, by the touch device, a page switching instruction by using a screen edge area, and switching a currently displayed user interface page according to the page switching instruction; and releasing the icon so that the touch device moves the icon to a switched user interface page. The embodiments of the present invention are applicable to user interface icon management.

## Description

### CROSS-REFERENCE TO RELATED APPLICATION

This application claims priority to Chinese Patent Application No. CN 201210203319.5, filed with the Chinese Patent Office on June 19, 2012 and entitled "USER INTERFACE ICON MANAGEMENT METHOD AND TOUCH DEVICE", which is incorporated herein by reference in its entirety.

### TECHNICAL FIELD

The present invention relates to the field of communications, and in particular, to a user interface icon management method and a touch device.

### BACKGROUND

A smart terminal OS (Operating System, operating system) includes a desktop container, where the desktop container is used to hold components. The desktop container may include multiple pages. When the desktop container is accessed, a home page is displayed first. The home page of the desktop container is also called a first page of the desktop container or a home page of the desktop container. Other pages are arranged sequentially as a second page, a third page, and so on. On a page included in the desktop container, icons corresponding to the components are displayed. A full touch terminal cancels a physical navigation key, and replaces certain operation keys with touch operation based screen gestures. A user can switch to a previous page by swiping rightward on a touchscreen and switch to a next page by swiping leftward.

Currently, when the user needs to move a specific component on a current page to another page, the user holds down an icon corresponding to the component on the current page. After an operation of moving the component is triggered, the user drags the component to a left edge or a right edge of the current page, so that the page of the desktop container switches to the previous page or the next page correspondingly. When the page switches to a target page, the user releases the icon corresponding to the component that is held down.

However, for a user that is accustomed to operating a large-screen terminal with a single hand, the component moving operation based on a touch operation causes great pressure on a thumb and tends to cause hand fatigue when the user holds down and drags the icon corresponding to the component. Moreover, the thumb needs to swipe on a large screen, which is adverse to holding the terminal and increases risks of terminal falls. The foregoing two factors both deteriorate the user's operation experience.

### SUMMARY

Embodiments of the present invention provide a user interface icon management method and a touch device to enhance user experience.

To achieve the foregoing objective, the embodiments of the present invention adopt the following technical solutions:

According to one aspect, a user interface icon management method is provided, including:
receiving a state activation instruction based on an icon by using a screen of a touch device, so as to activate the icon into a movable state; receiving, by the touch device, a page switching instruction by using a screen edge area, and switching a currently displayed user interface page according to the page switching instruction, where the screen edge area refers to an area that has a specific width on two lateral edges along a currently displayed direction; and releasing the icon so that the touch device moves the icon to a switched user interface page.

Further, after the receiving a state activation instruction based on an icon by using a screen of a touch device and before the receiving, by the touch device, a page switching instruction by using a screen edge area, the method further includes: locking the icon in the movable state continuously.

Still further, the locking the icon in the movable state continuously includes: locking the icon in the movable state continuously by receiving a touch operation, where the touch operation includes a single-tap operation, a double-tap operation, or a hold-down operation.

In a possible implementation manner of the foregoing, the releasing the icon includes: receiving an icon-based state release instruction by using the screen of the touch device; or, releasing the state activation instruction.

According to another aspect, a touch device is provided, including a touchscreen and a processor, where:
the touchscreen is configured to: when receiving a state activation instruction based on an icon, send the state activation instruction to the processor; after receiving a page switching instruction by using a screen edge area, send the page switching instruction to the processor; and, when the touchscreen detects that the icon is released, send a release instruction to the processor; and the processor is configured to activate the icon into a movable state after receiving the state activation instruction sent by the touchscreen, switch a currently displayed user interface page according to the page switching instruction sent by the touchscreen, and, when the touchscreen detects that the icon is released, receive the release instruction sent by the touchscreen, and move the icon to a switched user interface page according to the release instruction.

In a possible implementation manner of the foregoing, the touchscreen is further configured to lock the icon in the movable state continuously after receiving the state activation instruction based on the icon and before receiving the page switching instruction by using the screen edge area.

Further, the touchscreen is specifically configured to lock the icon in the movable state continuously by receiving a touch operation, where the touch operation includes a single-tap operation, a double-tap operation, or a hold-down operation.

Still further, the when the touchscreen detects that the icon is released, sending a release instruction to the processor includes: receiving, by the touchscreen, an icon-based state release instruction, and sending the release instruction to the processor; or, releasing, by the touchscreen, the state activation instruction, and sending the release instruction to the processor.

The embodiments of the present invention provide a user interface icon management method and a touch device. The touch device receives a state activation instruction based on an icon by using a screen, so as to activate the icon into a movable state; and receives a page switching instruction by using a screen edge area, and switches a currently displayed user interface page according to the page switching instruction; and after completing the switching, releases the icon so that the touch device moves the icon to a switched user interface page. In this way, a user can move an icon from a current page to a switched page by only touching the screen edge area with a hand to trigger switching of the user interface page when the icon that needs to be moved is in the movable state, which enhances user experience with simple operations.

### DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of a user interface icon management method according to an embodiment of the present invention;
FIG. 2 is a diagram of an example of a user interface icon management method according to an embodiment of the present invention;
FIG. 3 is a schematic diagram of another user interface icon management method according to an embodiment of the present invention;
FIG. 4 is a schematic structural diagram of a touch device according to an embodiment of the present invention; and
FIG. 5 is a structural diagram of a touch device entity according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

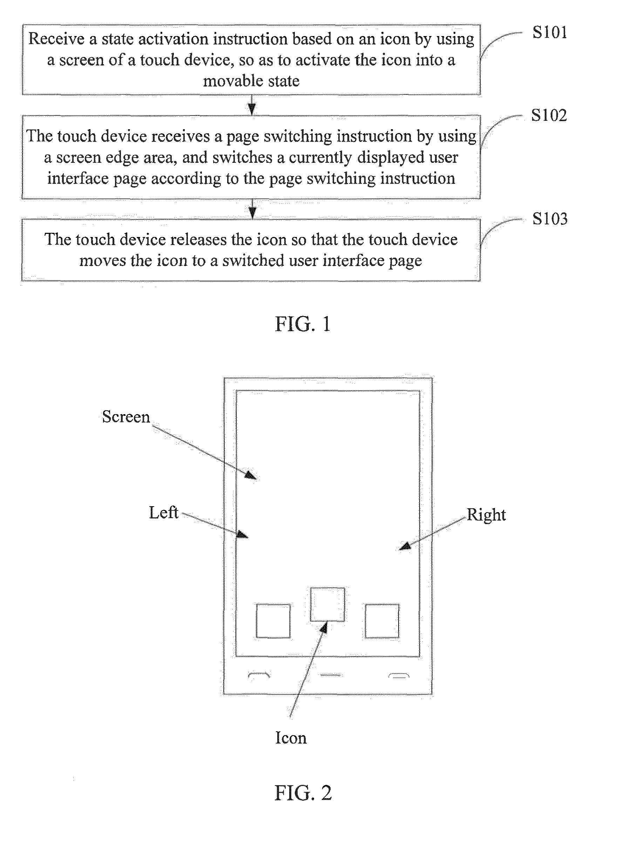

An embodiment of the present invention provides a user interface icon management method. As shown in FIG. 1, the method is executed by a touch device, and the method includes:

S101. Receive a state activation instruction based on an icon by using a screen of a touch device, so as to activate the icon into a movable state.

The icon is displayed on a current page of the screen of the touch device. A user may move the icon to another page according to the user's will. The icon may correspond to an application component installed by the user, or may correspond to a component that is inherent in the touch device, but the embodiment of the present invention is not limited thereto.

For example, by using the touchscreen of the touch device, the user holds down an icon that needs to be moved, so that the icon enters a movable state; or, by using the touchscreen of the touch device, the user holds down the icon for a preset time and then releases an operating finger, so that the icon enters a movable state, where the preset time may be preset by a developer in the touch device.

It should be noted that the movable state means that the user may move the icon by performing actions such as dragging and pulling for the icon on the touchscreen of the touch device. Preferably, the icon that is in the movable state is different from other icons on a currently displayed page on the screen of the touch device. For example, the icon that is in the movable state may be in a floating state (where on the screen of the touch device, the user intuitively sees that the icon floats above other icons), or the icon that is in the movable state may take on a color different from those of other icons on the screen of the touch device, but the embodiment of the present invention is not limited thereto.

S102. The touch device receives a page switching instruction by using a screen edge area, and switches a currently displayed user interface page according to the page switching instruction.

The screen edge area refers to an area that has a specific width on two lateral edges along a currently displayed direction, where the specific width may be preset in the touch device, or may be manually adjusted later, which is not limited in the embodiment of the present invention.

Specifically, after the touch device receives a page switching instruction, a screen page of the touch device is switched from a current page to a page indicated by the page switching instruction.

For example, referring to FIG. 2 and using a touch phone as an example for description, if a user touches a left side of a screen of a touch device (that is, the touch device receives a page switching instruction), a screen page of the touch device is switched from the current page to a page located at a left side of the page. Likewise, if the user touches a right side of the screen of the touch device (that is, the touch device receives a page switching instruction), the screen page of the touch device is switched from the current page to a page located at a right side of the page.

In addition, after the receiving a state activation instruction based on an icon by using a screen of a touch device and before the receiving, by the touch device, a page switching instruction by using a screen edge area, the method includes:
locking, by the touch device, the icon in the movable state continuously.

Specifically, the user may lock the icon in the movable state continuously by performing a touch operation, where the user's touch operation includes a single-tap operation, a double-tap operation, or a hold-down operation, which is not limited in the embodiment of the present invention. The specific operation manner may be preset in the touch device or may be configured by the user, but the embodiment of the present invention is not limited thereto.

S103. The touch device releases the icon so that the touch device moves the icon to a switched user interface page.

The releasing the icon may specifically include the following two cases:
Case 1: If, to enable the icon to enters the movable state, the user uses the touchscreen of the touch device to hold down the icon that needs to be moved, the state activation instruction is released after the currently displayed user interface page is switched, and accordingly, the icon is moved to a position closest to the icon on the switched page.
Case 2: If, to enable the icon to enter the movable state, the user holds down the icon for a preset time by using the touchscreen of the touch device and then releases the operating finger, an icon-based state release instruction is received by using the screen of the touch device, and accordingly, the icon is moved to a position closest to the icon on the switched page.

The receiving an state release instruction may specifically be: holding down, by the user, the icon for a preset time by using the touchscreen of the touch device, but the embodiment of the present invention is not limited thereto.

It should be noted that, the touch device in the foregoing embodiment may be various devices where a touch operation is performed by using a touchscreen, such as a touchscreen phone or a touchscreen tablet computer, but the embodiment of the present invention is not limited thereto.

By applying the method in the foregoing embodiment, a user can move an icon from a current page to a switched page by only touching a screen edge area with a hand to trigger switching of a user interface page when the icon that needs to be moved is in a movable state, which enhances user experience with simple operations.

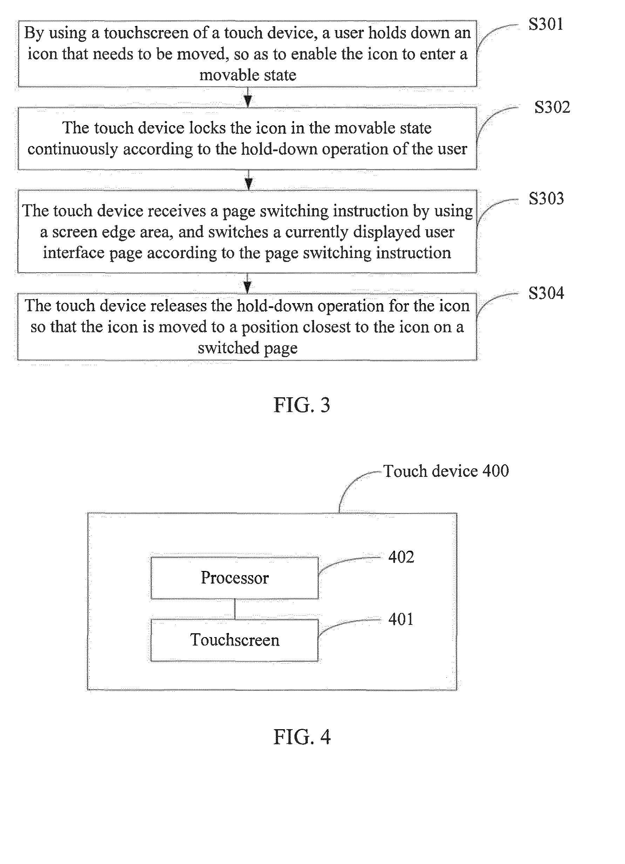

Preferably, an embodiment of the present invention provides a user interface icon management method. As shown in FIG. 3, specific steps of the method include:

S301. By using a touchscreen of a touch device, a user holds down an icon that needs to be moved, so as to enable the icon to enter a movable state.

The icon is displayed on a current page of the screen of the touch device. The user may move the icon to another page according to the user's will. The icon may correspond to an application component installed by the user, or may correspond to a component that is inherent in the touch device, but the embodiment of the present invention is not limited thereto.

The movable state means that the user may move the icon by performing actions such as dragging and pulling for the icon on the touchscreen of the touch device. Preferably, the icon that is in the movable state is different from other icons on a currently displayed page on the screen of the touch device. For example, the icon that is in the movable state may be in a floating state (where on the screen of the touch device, the user intuitively sees that the icon floats above other icons), or the icon that is in the movable state may take on a color different from those of other icons on the screen of the touch device, but the embodiment of the present invention is not limited thereto.

S302. The touch device locks the icon in the movable state continuously according to the hold-down operation of the user.

S303. The touch device receives a page switching instruction by using a screen edge area, and switches a currently displayed user interface page according to the page switching instruction.

The screen edge area refers to an area that has a specific width on two lateral edges along a currently displayed direction, where the specific width may be preset in the touch device, and may be manually adjusted later, which is not limited in the embodiment of the present invention.

For details, reference may be made to the description about FIG. 2 in the foregoing embodiment.

S304. The touch device releases the hold-down operation for the icon so that the icon is moved to a position closest to the icon on a switched page.

It should be noted that, the touch device in the foregoing embodiment may be various devices where a touch operation is performed by using a touchscreen, such as a touchscreen phone or a touchscreen tablet computer, but the embodiment of the present invention is not limited thereto.

By applying the method in the foregoing embodiment, a user can move an icon from a current page to a switched page by only touching a screen edge area with a hand to trigger switching of a user interface page when the icon that needs to be moved is in a movable state, which enhances user experience with simple operations.

An embodiment of the present invention further provides a touch device 400. As shown in FIG. 4, the touch device includes a touchscreen 401 and a processor 402.

The touchscreen 401 is configured to: when receiving a state activation instruction based on an icon, send the state activation instruction to the processor 402; after receiving a page switching instruction by using a screen edge area, send the page switching instruction to the processor 402; and, when the touchscreen detects that the icon is released, send a release instruction to the processor 402.

The icon is displayed on a current page of the screen of the touch device. A user may move the icon to another page according to the user's will. The icon may correspond to an application component installed by the user, or may correspond to a component that is inherent in the touch device, but the embodiment of the present invention is not limited thereto.

The processor 402 is configured to activate the icon into a movable state after receiving the state activation instruction sent by the touchscreen 401, switch a currently displayed user interface page according to the page switching instruction sent by the touchscreen 401, and, when the touchscreen 401 detects that the icon is released, receive the release instruction sent by the touchscreen 401, and move the icon to a switched user interface page according to the release instruction.

Further, the touchscreen 401 is further configured to lock the icon in the movable state continuously after receiving the state activation instruction based on the icon and before receiving the page switching instruction by using the screen edge area.

The movable state means that the user may move the icon by performing actions such as dragging and pulling for the icon on the touchscreen of the touch device. Preferably, the icon that is in the movable state is different from other icons on a currently displayed page on the screen of the touch device. For example, the icon that is in the movable state may be in a floating state (where on the screen of the touch device, the user intuitively sees that the icon floats above other icons), or the icon that is in the movable state may take on a color different from those of other icons on the screen of the touch device, but the embodiment of the present invention is not limited thereto.

Further, the touchscreen 401 is specifically configured to lock the icon in the movable state continuously by receiving a touch operation.

The touch operation includes a single-tap operation, a double-tap operation, or a hold-down operation, but the embodiment of the present invention is not limited thereto. The specific operation manner may be preset in the touch device or may be configured by the user, which is not limited in the embodiment of the present invention.

Optionally, the touchscreen 401 is specifically configured to receive an icon-based state release instruction, and send the release instruction to the processor 402.

Optionally, the touchscreen 401 is specifically configured to release the state activation instruction, and send the release instruction to the processor 402.

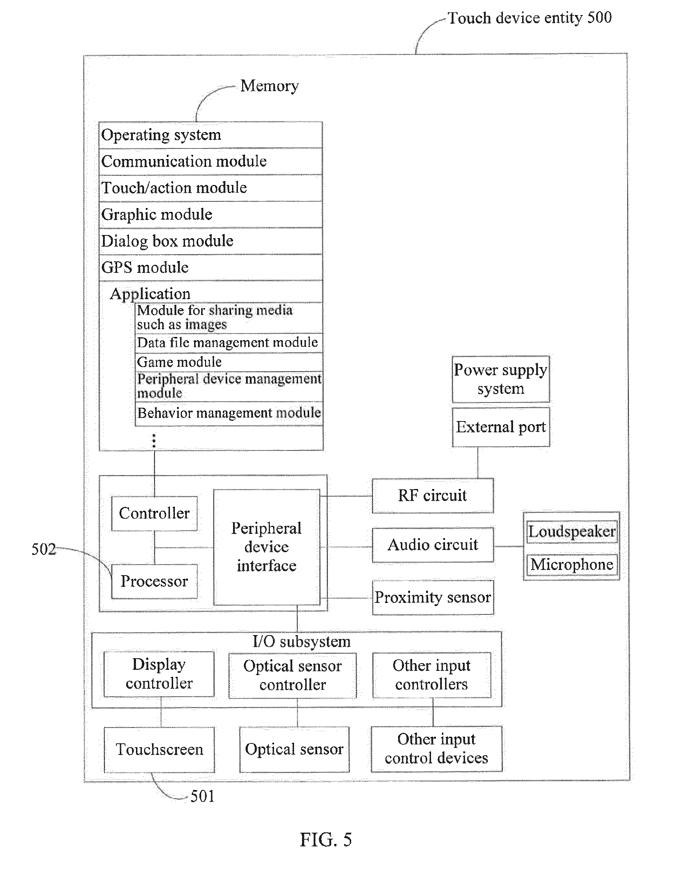

It should be noted that, the touch device in the foregoing embodiment may be various devices where a touch operation is performed by using a touchscreen, such as a touchscreen phone or a touchscreen tablet computer, but the embodiment of the present invention is not limited thereto. Specifically, as shown in FIG. 5, a touch device entity 500 is described. The touch device entity 500 shows an actual hardware structure of a touch device such as a touchscreen phone or a touchscreen tablet computer. Connections between modules of the entity are also shown in FIG. 5. A touchscreen 501 and a processor 502 in the touch device entity 500 correspond to the touchscreen 401 and the processor 402 in the touch device 400, and the touch device entity 500 is applied to the user interface icon management method.

By applying the touch device or the touch device entity, a user can move an icon from a current page to a switched page by only touching a screen edge area with a hand to trigger switching of a user interface page when the icon that needs to be moved is in a movable state, which enhances user experience with simple operations.

A person of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

[**0066**] The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A user interface icon management method, comprising:
receiving a state activation instruction based on an icon by using a screen of a touch device, so as to activate the icon into a movable state;
receiving, by the touch device, a page switching instruction by using a screen edge area, and switching a currently displayed user interface page according to the page switching instruction, wherein the screen edge area refers to an area that has a specific width on two lateral edges along a currently displayed direction; and
releasing the icon so that the touch device moves the icon to a switched user interface page.

2. The method according to claim 1, wherein, after the receiving a state activation instruction based on an icon by using a screen of a touch device and before the receiving, by the touch device, a page switching instruction by using a screen edge area, the method comprises:
locking the icon in the movable state continuously.

3. The method according to claim 2, wherein the locking the icon in the movable state continuously comprises: locking the icon in the movable state continuously by receiving a touch operation, wherein the touch operation comprises a single-tap operation, a double-tap operation, or a hold-down operation.

4. The method according to any one of claims 1 to 3, wherein the releasing the icon comprises:
receiving an icon-based state release instruction by using the screen of the touch device; or,
releasing the state activation instruction.

5. A touch device, comprising a touchscreen and a processor, wherein:
the touchscreen is configured to: when receiving a state activation instruction based on an icon, send the state activation instruction to the processor; after receiving a page switching instruction by using a screen edge area, send the page switching instruction to the processor; and, when the touchscreen detects that the icon is released, send a release instruction to the processor; and
the processor is configured to activate the icon into a movable state after receiving the state activation instruction sent by the touchscreen, switch a currently displayed user interface page according to the page switching instruction sent by the touchscreen, and, when the touchscreen detects that the icon is released, receive the release instruction sent by the touchscreen, and move the icon to a switched user interface page according to the release instruction.

6. The device according to claim 5, wherein the touchscreen is further configured to lock the icon in the movable state continuously after receiving the state activation instruction based on the icon and before receiving the page switching instruction by using the screen edge area.

7. The device according to claim 6, wherein the touchscreen is specifically configured to lock the icon in the movable state continuously by receiving a touch operation, wherein the touch operation comprises a single-tap operation, a double-tap operation, or a hold-down operation.

8. The device according to claims 5 to 7, wherein, the when the touchscreen detects that the icon is released, sending a release instruction to the processor comprises:
receiving, by the touchscreen, an icon-based state release instruction, and sending the release instruction to the processor;
or,
releasing, by the touchscreen, the state activation instruction, and sending the release instruction to the processor.
